# EUROPÄISCHE PATENTSCHRIFT

(11) **EP 1 077 612 B1**
(45) Veröffentlichungstag und Bekanntmachung des Hinweises auf die Patenterteilung: **17.07.2002**
(21) Anmeldenummer: 99916890.9
(22) Anmeldetag: 25.03.1999
(51) Int. Cl.: A23C 7/04, A23C 21/00, B04B 11/02

(54) **VERFAHREN UND VORRICHTUNG ZUR ZENTRIFUGALEN ENTRAHMUNG VON MOLKE**
METHOD AND DEVICE FOR CENTRIFUGAL SKIMMING OF WHEY
PROCEDE ET DISPOSITIF POUR L'ECREMAGE PAR CENTRIFUGATION DE LACTOSERUM

(30) Priorität: 09.05.1998 DE 19820870
(43) Veröffentlichungstag der Anmeldung: 28.02.2001
(73) Patentinhaber: Westfalia Separator AG, 59302 Oelde (DE)
(72) Erfinder: ZETTIER, Karl-Heinz, D-59302 Oelde (DE)
(74) Vertreter: Specht, Peter, Dipl.-Phys.
(86) Internationale Anmeldenummer: EP9902022
(87) Internationale Veröffentlichungsnummer: WO9957988

(56) Entgegenhaltungen:
- WO-A-90/00862
- DE-C- 19 503 065
- FR-A- 2 625 649
- GB-A- 2 294 191
- US-A- 3 983 257
- KAMATH S R ET AL: "RECOVERY AND COMPOSITION OF SWISS CHEES WHEY LIPID-CONTAINING FRACTIONS" JOURNAL OF AGRICULTURAL AND FOOD CHEMISTRY, Bd. 45, Nr. 11, 1. November 1997 (1997-11-01), Seiten 4271-4274, XP000721528 ISSN: 0021-8561
- RINN J -C ET AL: "EVALUATION OF NINE SEMI-PILOT SCALE WHEY PRETREATMENT MODIFICATIONSFOR PRODUCING WHEY PROTEIN CONCENTRATE" JOURNAL OF FOOD SCIENCE, Bd. 55, Nr. 2, 1. März 1990 (1990-03-01), Seiten 510-515, XP000126292 ISSN: 0022-1147
- "HERMETISCHE SEPARATOREN FUER ENTRAHMUNG, BACTOFUGATION UND MOLKEBEHANDLUNG" DMZ. LEBENSMITTELINDUSTRIE UND MILCHWISSENSCHAFT, Bd. 116, Nr. 6, 16. März 1995 (1995-03-16), Seite 248/249 XP000497067 ISSN: 0938-9369
- H. LEHMANN: "Der Einsatz von Separatoren in der Milchindustrie" ÖSTERREICHISCHE MILCHWIRTSCHAFT, Bd. 34, Nr. 4, 1979, Seiten 57-61, XP002110701

## Beschreibung

Die Erfindung bezieht sich auf ein Verfahren sowie eine Vorrichtung zur zentrifugalen Entrahmung von Molke, bei dem bzw. bei der die Rohmolke einem Zulauf eines Entrahmungsseparators zugeführt und in die Phasen entrahmte Molke und Molkenrahm zerlegt wird, die aus dem Entrahmungsseparator über Ausläufe abgeleitet werden.

Die Konzentration des Molkenrahms wird durch ein in der Ablaufleitung des Molkenrahms vorgesehenes Regelventil eingestellt.

Ein derartiges Verfahren und eine solche Vorrichtung sind bekannt aus "Österreichische Milch wirtschaft", 1979, Nr.4, S.57-61 (H. LEHMANN).

Die Rohmolke ist die Flüssigkeit, die bei der Herstellung von Käse nach Abscheidung des Käsestoffes (Kasein) und des Fettes bei der Gerinnung der Milch anfällt.

Der Fettgehalt der zu entrahmenden Rohmolke ist in der Regel relativ gering. Er liegt bei ca. 0,1 bis 0,2 Prozent. Der aus dem Entrahmungsseparator ablaufende Molkenrahm wird auf ca. 30 Prozent Fettgehalt eingestellt. Dadurch ergibt sich eine Rahmmenge, die im ungünstigsten Fall nur 1/300 der zugeführten Rohmolke entspricht. Bei einer derart geringen Rahmmenge wird im Entrahmungsseparator auch nur eine geringe Fließgeschwindigkeit erzielt, wodurch es schon bei kleinsten Störungen, beispielsweise durch Lufteinschlag, zur Unterbrechung des Rahmflusses und damit zu einer Verschlechterung der Entrahmungsstärke des Entrahmungsseparators kommt. Außerdem kann der Rahm bei dieser geringen Fließgeschwindigkeit ausölen.

Eine weitere Strögröße ist der sehr unterschiedliche Fettgehalt in der Rohmolke, der von Käsefertiger zu Käsefertiger sich sprunghaft innerhalb der vorgenannten Werte von 0,1 bis 0,4 Prozent ändern kann. Dies bedeutet, daß die über die Ablaufleitung für den Molkenrahm abfließenden Mengen sich mit dem Faktor 4 verändern können. Wegen der geringen Rahmmenge und der sprunghaften Veränderung derselben ist eine automatische Regelung der Konzentration bisher nicht mit Erfolg einsetzbar.

Der Erfindung liegt die Aufgabe zugrunde, ein Verfahren zur zentrifugalen Entrahmung von Molke zu schaffen, mit dem einerseits eine bessere Fettqualität des Rahmes erzielt wird und das andererseits eine automatische Regelung der Rahmkonzentration ermöglicht.

Ferner soll eine Vorrichtung zur Durchführung des Verfahrens gestaltet werden.

Erfindungsgemäß wird die Aufgabe mit einem Verfahren der eingangs genannten Art dadurch gelöst, daß eine Teilmenge des Molkenrahms in den Zulauf des Entrahrnungsseparators zurückgeführt wird und die Teilmenge 0,5 bis 2 Prozent des Volumenstromes der dem Entrahmungsseparator zugeführten Rohmolke beträgt.

Bei einer vorteilhaften Ausbildung des erfindungsgemäßen Verfahrens wird in der Rückführungsleitung für eine Teilmenge des Volumenstromes des Molkenrahms ein konstanter Volumenstrom mit konstanten Druckverhältnissen eingestellt und es werden Dichtemessungen vorgenommen, die von dem Dichtetransmitter einem Auswertgerät zugeleitet werden, von dem aus das in der Ablaufleitung des Molkenrahms vorgesehene Regelventil eingestellt wird.

Die Vorrichtung zur Durchführung des erfindungsgemäßen Verfahrens weist einen mit einem Zulauf für Rohmolke und mit Abläufen für entrahmte Molke und Molkenrahm versehenen Entrahmungsseparator auf. Von der Ablaufleitung für den Molkenrahm geht eine Rückführungsleitung für eine Teilmenge des Molkenrahms aus, die in die Zulaufleitung für die Rohmolke einmündet. In der Rückführungsleitung sind ein Flüssigkeitsmesser und ein Dichtetransmitter vorgesehen, der mit einem Auswertgerät in Verbindung steht, durch das das in der Ablaufleitung für den Molkenrahm eingeordnete Regelventil einstellbar ist.

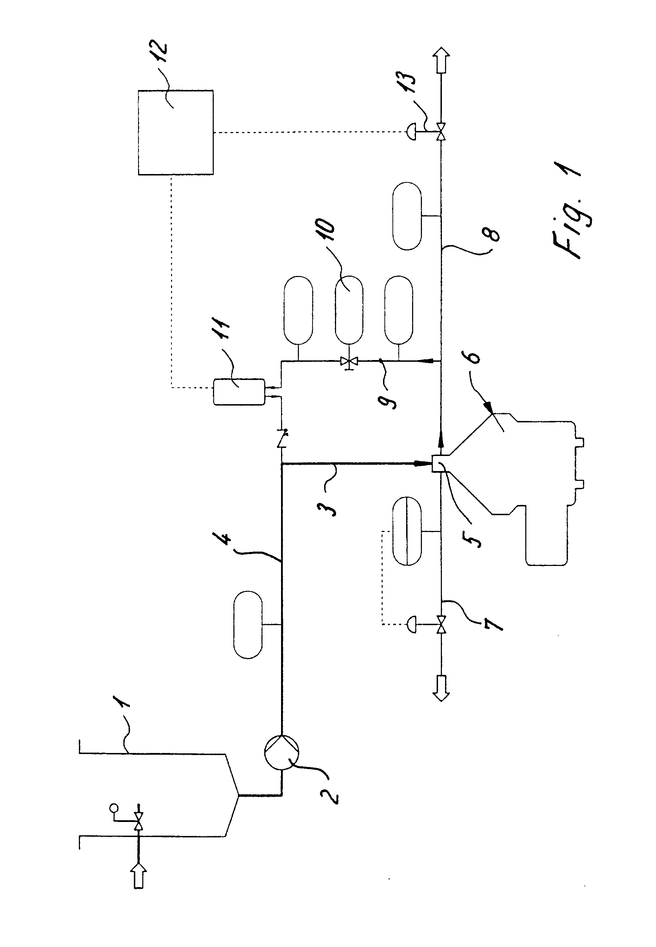

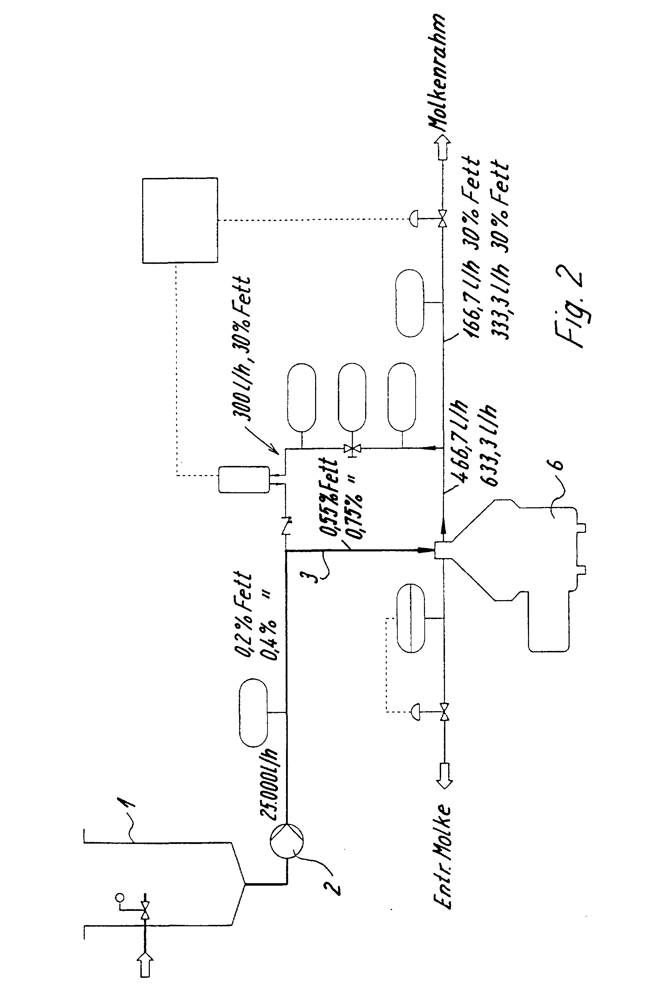

Das erfindungsgemäße Verfahren und die zur Durchführung des Verfahrens erforderliche Vorrichtung werden anhand der Figuren 1 und 2 näher erläutert.

Die Figur 1 zeigt ein Fließschema für die Rohmolke und für die aus der Rohmolke gewonnenen Phasen sowie die für die Durchführung des Verfahrens erforderlichen Vorrichtungsteile.

In der Fig. 2 sind als ein Ausführungsbeispiel die Volumenströme und die zugehörigen Fettgehalte in den verschiedenen Leitungen angegeben.

Die Rohmolke wird einem Behälter 1 zugeführt, von dem aus sie mittels einer Pumpe 2 abgezogen und einer Zulaufleitung 3 über eine Förderleitung 4 zugeführt wird, wobei die Zulaufleitung 3 in den Zulauf 5 eines Entrahmungsseparators 6 einmündet. In dem Entrahmungsseparator 6 wird eine Aufteilung der Rohmolke in die Phasen "entrahmte Molke" und "Molkenrahm" vorgenommen. Die entrahmte Molke wird über eine Ablaufleitung 7 und der Molkenrahm über eine Ablaufleitung 8 abgeführt.

Eine Teilmenge des Molkenrahms wird durch eine Rückführungsleitung 9 in die Zulaufleitung 3 zurückgeführt. In der Rückführungsleitung 9 ist ein Flüssigkeitsmesser 10 und ein Dichtetransmitter 11 angeordnet. Der Dichtetransmitter steht mit einem Auswertgerät in Verbindung, das in einem Steuerschrank 12 angeordnet ist. Von diesem Auswertgerät wird ein in der Ablaufleitung 8 für den Molkerahm angeordnetes Regelventil 13 eingestellt.

In der Fig. 2 ist ein Ausführungsbeispiel dargestellt, bei dem der Volumenstrom der Rohmolke 25.000 l/h beträgt, der von der Pumpe 2 aus dem Behälter 1 gefördert und der Zulaufleitung 3 zugeführt wird. Der Fettgehalt dieser Rohmolke schwankt zwischen 0,2 und 0,4 Prozent. Daraus ergibt sich ein Volumenstrom auf der Rahmseite des Entrahmungsseparators 6, der zwischen 166,7 l/h und 333,3 l/h schwanken kann. Ohne Rückführung von Molkenrahm ändern sich somit die Zulaufbedingungen für den Entrahmungsseparator hinsichtlich des Fettgehaltes um 100 Prozent.

Eine derart starke Schwankung führt zu den vorgenannten Problemen und bedingt spontane manuelle Eingriffe in die Einstellung des Separators.

Bei einer angenommenen Teilmenge von 300 l/h an Molkenrahm, die durch die Rückführungsleitung 9 in den Zulauf 3 zurückgeführt wird, stellt sich im Zulauf des Entrahmungsseparators eine Fettmenge zwischen 0,55 Prozent und 0,75 Prozent ein. Die Schwankung im Zulauf beträgt damit nur 36 Prozent.

Außerdem fließt im Entrahmungsseparator 6 eine Rahmmenge, die um die rückgeführte Teilmenge von 300 l/h erhöht ist. Die Fließgeschwindigkeit ist dadurch um 100 Prozent und mehr erhöht.

In der Rückführungsleitung 9 kann ein konstanter Volumenstrom mit konstanten Druckverhältnissen eingestellt werden. Durch den Dichtetransmitter 11 wird ein Dichtemessung in dem Volumenstrom der Rückführungsleitung vorgenommen und es wird der gemessene Dichtewert einem Auswertgerät übermittelt, das in dem Steuerschrank 12 angeordnet ist und das Regelventil 13 in der Ablaufleitung 8 für den Molkenrahm angeordnet ist.

### Bezugszeichenliste

- 1: Behälter
- 2: Pumpe
- 3: Zulaufleitung
- 4: Förderleitung
- 5: Zulauf
- 6: Entrahmungsseparator
- 7: Ablaufleitung
- 8: Ablaufleitung
- 9: Rückführungsleitung
- 10: Flüssigkeitsmesser
- 11: Dichtetransmitter
- 12: Steuerschrank
- 13: Regelventil

## Patentansprüche

1. Verfahren zur zentrifugalen Entrahmung von Molke, bei dem die Rohmolke einem Zulauf eines Entrahmungsseparators zugeführt und in die Phasen "entrahmte Molke" und "Molkenrahm" zerlegt wird, die aus dem Entrahmungsseparator über Ausläufe abgeleitet werden, wobei in der Ablaufleitung des Molkenrahms ein Regelventil angeordnet ist, **dadurch gekennzeichnet, daß** eine Teilmenge des Molkenrahms in den Zulauf (5) des Entrahmungsseparators (6) zurückgeführt wird und die Teilmenge 0,5 bis 2 Prozent des Volumenstroms der dem Entrahmungsseparator (6) zugeführten Rohmolke beträgt.

2. Verfahren nach Anspruch 1, **dadurch gekennzeichnet, daß** in der Rückführungsleitung (9) für eine Teilmenge des Volumenstroms des Molkerahms ein konstanter Volumenstrom mit konstanten Druckverhältnissen eingestellt und Dichtemessungen vorgemommen werden, die von einem Dichtetransmitter (11) einem Auswertgerät zugeleitet werden, von dem aus das in der Ablaufleitung (8) des Molkenrahms vorgesehene Regelventil (13) eingestellt wird.

3. Vorrichtung zur Durchführung des Verfahrens nach Anspruch 1 oder 2, mit einem einen Zulauf für Rohmolke und Abläufe für entrahmte Molke und Molkenrahm aufweisenden Entrahmungsseparator, **gekennzeichnet durch** eine von der Ablaufleitung (8) für den Molkenrahm ausgehende in eine Zulaufleitung (3) für die Rohmolke mündende Rückführungsleitung (9) für eine Teilmenge des Molkenrahms, in der ein Flüssigkeitsmesser (10) und ein Dichtetransmitter (11) vorgesehen sind und daß der Dichtetransmitter (11) mit einem Auswertgerät in Verbindung steht, **durch** das das in der Ablaufleitung (8) für den Molkerahm angeordnete Regelventil (13) einstellbar ist.

## Claims

1. Method of centrifugal separation of whey, in which the raw whey is fed to an inlet of a cream separator and broken down into the phases "separated whey" and "whey cream", which are discharged from the cream separator by way of outlets, wherein a regulating valve is arranged in the outlet duct of the whey cream, **characterised in that** a part quantity of the whey cream is returned to the inlet (5) of the cream separator (6) and the part quantity amounts to 0.5 to 2 percent of the volume flow of the raw whey fed to the cream separator (6).

2. Method according to claim 1, **characterised in that** a constant volume flow with constant pressure relationships is set in the feedback duct (9) for a part quantity of the volume flow of the whey cream and density measurements are undertaken which are conducted from a density transmitter (11) to evaluating apparatus, from which the regulating valve (13) provided in the outlet duct (8) of the whey cream is set.

3. Device for carrying out the method according to claim 1 or 2, with a cream separator having an inlet for raw whey and outlets for separated whey and whey cream, **characterised by** a return duct (9), which goes out from the outflow duct (8) for the whey cream and opens into a feed duct (3) for the raw whey and in which a fluidimeter (10) and a density transmitter (11 ) are provided, for a part quantity of the whey cream and that the density transmitter (11) is connected with evaluating apparatus by which the regulating valve (13) arranged in the outlet duct (8) for the whey cream is adjustable.

## Revendications

1. Procédé d'écrémage centrifuge de petit-lait, dans lequel le petit-lait brut est envoyé vers l'arrivée d'un séparateur d'écrémage, et est décomposé dans les phases "petit-lait écrémé" et "crème de petit-lait", lesquelles sont évacuées du séparateur d'écrémage par des sorties, une soupape de régulation étant disposée dans la conduite de sortie de la crème de petit-lait, **caractérisé en ce qu'**une quantité partielle de la crème de petit-lait est recyclée dans l'arrivée (5) du séparateur d'écrémage (6), et la quantité partielle représente de 0,5 à 2 pour cent du flux volumique du petit-lait brut envoyé au séparateur d'écrémage (6).

2. Procédé selon la revendication 1, **caractérisé en ce que** dans la conduite de recyclage (9) pour une quantité partielle du flux volumique de la crème de petit-lait, il est réglé un flux volumique constant avec des conditions de pression constantes, et Il est procédé à des mesures de densité qui sont acheminées par un transmetteur de densité (11) à un appareil d'exploitation à partir duquel on règle la soupape de régulation (13) prévue dans la conduite de sortie (8) de la crème de petit-lait.

3. Dispositif pour la mise en oeuvre du procédé selon la revendication 1 ou 2, comportant un séparateur d'écrémage contenant une arrivée pour le petit-lait brut et des sorties pour le petit-lait écrémé et la crème de petit-lait, **caractérisé par** une conduite de recyclage (9) partant de la conduite de sortie (8) pour la crème de petit-lait et débouchant dans une conduite d'entrée (3) pour le petit-lait brut, pour une quantité partielle de la crème de petit-lait, dans laquelle sont prévus un fluidimètre (10) et un transmetteur de densité (11), et en ce que le transmetteur de densité (11) est en liaison avec un appareil d'exploitation par lequel on peut régler la soupape de régulation (13) disposée dans la conduite de sortie (8) pour la crème de petit-lait.
